**Europäisches Patentamt**

**European Patent Office**

**Office européen des brevets**

(19)

(11) Veröffentlichungsnummer: **0 096 113**

**A2**

(12) # EUROPÄISCHE PATENTANMELDUNG

(21) Anmeldenummer: **82111221.6**

(22) Anmeldetag: **03.12.82**

(51) Int. Cl.³: **G 06 F 3/04**

(30) Priorität: **16.06.82 CH 3713/82**

(43) Veröffentlichungstag der Anmeldung:
**21.12.83 Patentblatt 83/51**

(84) Benannte Vertragsstaaten:
**AT BE CH DE FR LI**

(71) Anmelder: **SIEMENS-ALBIS AKTIENGESELLSCHAFT**
**EGA1/Verträge und Patente Postfach**
**CH-8047 Zürich(CH)**

(72) Erfinder: **Husi, Kurt**
**Langacherstrasse 12**
**CH-8103 Unterengstringen(CH)**

(54) **Bussystem.**

(57) Das Bussystem ist für eine bidirektionale Uebertragung von Daten zwischen einem Zentralrechner und einer Peripheriestation vorgesehen. In einer peripheren Ein-/Ausgabe-Schaltung (PES) ist eine Dekoderschaltung (Di, Wi) vorhanden, die aus dem Adress-Codewort und einem zusätzlich redundant übertragenen Kontroll-Adress-Codewort zwei Ausgangssignale (Ai, Wi) erzeugt, wobei ein zusätzlicher Registerwähler (RW) nachgeschaltet ist, der nur beim Vorhandensein beider Ausgangssignale (Ai, Wi) die Steuerbits (Sm, Sn, Sp, Sq) abgibt. Der Ein-/Ausgabe-Schaltung (PES) ist eine Kontrollstufe (KS) nachgeschaltet, in welcher die einzelnen Bits der Folge von Datenwörtern mit den einzelnen Bits einer zusätzlich redundant übertragenen Folge von Kontroll-Datenwörtern bitweise verglichen werden und welche jeweils nur beim Vorhandensein von je einem Datenbit beider Folgen ein Datenbit weiterleitet. Dadurch wird eine über die ganze Anlage gleichwertige Datensicherung gewährleistet.

./...

FIG.1

SIEMENS-ALBIS AG                    – 1 –

Bussystem

Die vorliegende Erfindung betrifft ein Bussystem nach dem Oberbegriff des Patentanspruchs 1.

Zur Uebertragung von Daten zwischen einem Zentralrechner und einer Peripheriestation werden oft Bussysteme eingesetzt, über die die Daten in beiden Richtungen verkehren können. Ein solches Bussystem besteht in seiner einfachsten Form aus einer zentralen Buseinheit und mindestens einer Ein-/Ausgabe-Schaltung, die durch ein Leitungsbündel miteinander verbunden sind. Bei einem derartigen Uebertragungssystem stellt sich im allgemeinen das Problem der Datensicherung über das Bussystem. Uebliche Zentralrechner und Peripheriestationen arbeiten nämlich in der Regel gemäss einem der verschiedenen bekannten Verfahren, die eine hohe Datensicherung gewährleisten. Einfache Bussysteme bieten hingegen keine so hohe Datensicherung, die mit derjenigen im Zentralrechner und in den Peripheriestationen vergleichbar wäre, so dass ein übliches Bussystem die schwache Stelle in bezug auf die Datensicherung darstellen würde.

Der Erfindung liegt daher die Aufgabe zugrunde, ein Bussystem zur Uebertragung von Daten zwischen einem Zentralrechner und einer Peripheriestation anzugeben, welches eine über die ganze Anlage gleichwertige Datensicherung gewährleistet. Dies wird erfindungsgmäss mit einem Bussystem erreicht, wie es im Anspruch 1 gekennzeichnet ist.
Vorteilhafte Ausgestaltungen der Erfindung sind in weiteren Ansprüchen angegeben.

Die Erfindung wird nachfolgend anhand von Zeichnungen beispielsweise näher erläutert. Dabei zeigt :

Fig.1 das Blockschaltbild eines Bussystems mit einer Buseinheit (BE) und einer mit dieser über Busleitungen (B1, B2, B3, b1, b2, b3) verbundenen Ein-/Ausgabeschaltung (PES),

Fig.2 das Blockschaltbild eines Registerwählers (RW) einer Registerschaltung (RS) und einer peripheren Kontrollstufe (KS).

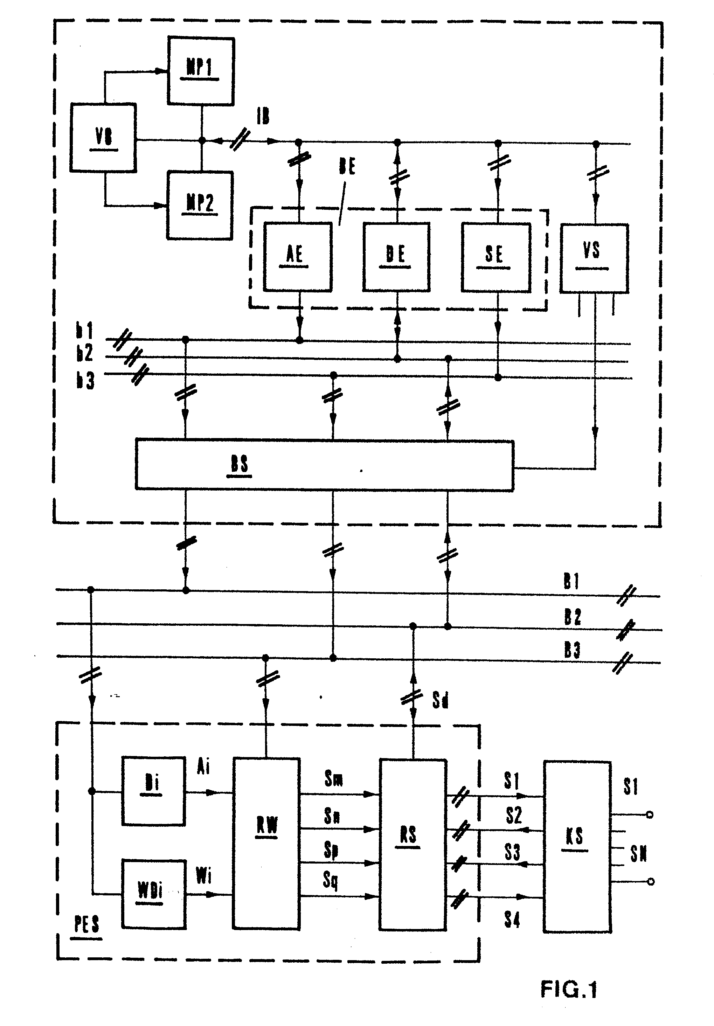

Das Bussystem nach Fig.1 weist eine Buseinheit BE und eine Ein-/Ausgabe-Schaltung PES auf, die je an ein Busleitungsbündel b1, b2, b3 und B1, B2, B3 angeschlossen sind. Die Busleitungen b1, b2, B1, B2, bestehen aus je 8 Aderpaaren für die Ueber- mittlung von Adress- bzw. Datensignalen. Die Busleitungen b3 und B3 sind mit je zwei Aderpaaren für die Uebertragung von zwei Steuersignalen Sy und Sz versehen. Die Busleitungen b2 und B2 sind bidirektional. Die Buseinheit BE umfasst drei Einheiten AE, DE und SE, über die ein interner Mikroprozessor-Bus IB mit den Busleitungen b1, b2 bzw. b3 verbunden sind. Dabei sind an den Bus IB noch zwei Mikroprozesoren MP1 und MP2, eine Vektorschaltung VS und ein Vergleicher VG angeschlossen, der die Mikroprozessoren steuert. Ein von der Vektorschaltung VS gesteuerter Busschalter BS ermöglicht ein Ein- und Ausschalten der Busleitungen B1, B2 B3 an die Busleitungen b1, b2 bzw. b3. Die Elemente MP1, MP2, VG, BE und b1, b2, b3 bilden eine Mikro- prozessor-Einheit ME, die mehrere Vektorschaltungen mit zugehörigen Busschaltern aufweisen kann.

Die Ein-/Ausgabe-Schaltung PES weist zwei "1 aus n"-Dekodierer DI und WDI, einen Registerwähler RW und eine Registerschaltung RS auf, wobei die Busleitung B1 mit den Eingängen der zwei Dekodierer DI und WDI, die Busleitung B2 mit den Datenanschlüssen der Registerschaltung RS und die Busleitung B3 mit den Steuereingängen des Registerwählers RW verbunden ist. Der Registerwähler RW ist eingangsseitig mit den Ausgangssignalen Ai und Wi der Dekodierer DI und IDI und die Registerschaltung RS mit den Ausgangssignalen Sm, Sn, Sp und Sq des Registerwählers RW beaufschlagt.

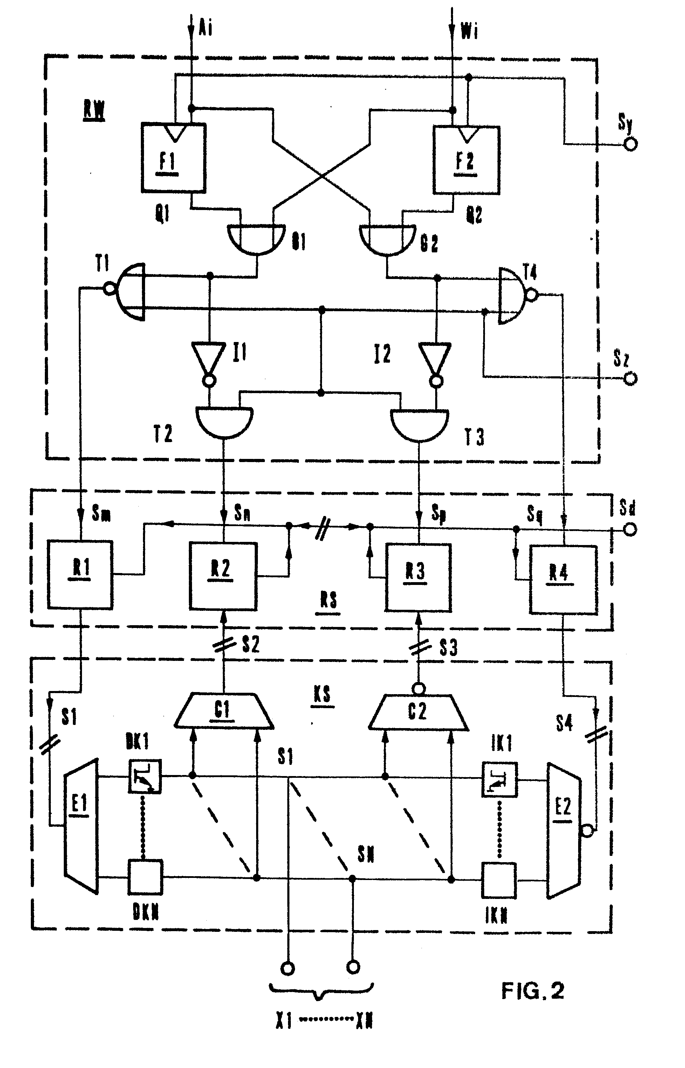

In Fig.2 ist eine mögliche Ausführung des Registerwählers RW und der Register- schaltung RS der Ein-/Ausgabe-Schaltung PES nach Fig.1 sowie einer nachgeschalteten Kontrollstufe KS dargestellt.

Der Registerwähler RW weist zwei Flipflops F1 und F2 auf, deren D-Eingänge mit den Signalen Ai bzw. Wi und deren Takt-Eingänge mit dem Steuersignal Sy beaufschlagt sind. Der Ausgang Q1 des Flipflops F1 ist über ein ODER-Glied G1 einerseits mit dem ersten Eingang eines NOR-Tores T1 und andererseits über einen Inverter I1 mit dem ersten Eingang eines UND-Tores T2 verbunden. Der Ausgang Q2 des Flipflops F2 ist über ein ODER-Glied G2 einerseits über einen Inverter I2 mit dem ersten Eingang eines UND-Tores T3 und andererseits mit dem ersten Eingang eines NOR-Tores T4 verbunden. Die zweiten Eingänge der Tore T1, T2, T3 und T4 sind gemeinsam mit dem Signal Sz beaufschlagt. Den anderen Eingängen der ODER-Glieder G1 und G2 werden die Signale Wi bzw. Ai zugeführt.

Die Registerschaltung RS besteht aus vier Registern R1, R2, R3 und R4, die von den Ausgangssignalen Sm, Sn, Sp bzw. Sq der Tore T1, T2, T3 bzw. T4 gesteuert werden. Die Register R1, R2, R3 und R4 sind gemeinsam an die die Datensignale Sd übertra- gende Busleitung B2 angeschlossen.

Die Kontrollstufe KS weist zwei ausgangsseitig mit den Eingängen der Register R2 bzw. R3 verbundene Konzentratoren C1 und C2 sowie zwei eingangsseitig mit den Ausgängen der Register R1 und R4 verbundene Expansoren E1 und E2 auf, wobei der Expansor E2 mit invertierenden Eingängen versehen ist. Die expanderseitigen Anschlüsse der Expansoren E1 und E2 sind über eine sogenannte ODER-Verdrahtungslogik (wired-OR-Logik) miteinander sowie mit den Konzentratoren C1 und C2 und mit den Terminalanschlüssen S1 ... SN für die Signale X1 ... XN verbunden. Dabei ist ein erster Ausgang des Expansors E1 über ein Gatter DK1 sowie ein erster Ausgang des Expansors E2 über ein Gatter IK1 mit einem ersten Terminalanschluss S1 verbunden. Weitere Ausgänge der Expansoren E1 und E2 können in gleicher Weise über Gatter mit entsprechend zugeordneten Anschlüssen verbunden sein. Hiezu werden Gatter mit offenem Kollektor verwendet.

Das Bussystem nach Fig.1 und 2 funktioniert folgendermassen :

Die Mikroprozessoren MP1 und MP2 arbeiten parallel mit einer Zeitdifferenz t unabhängig voneinander und geben nur dann Signale an den internen Bus IB ab, wenn der Vergleicher VG festgestellt hat, dass beide Mikroprozessoren identische oder äquivalente Signale erzeugt haben. Infolge der zeitlichen Verschiebung t sind die Mikroprozessoren unempfindlich gegen synchron eintreffende Störsignale. Dadurch wird eine doppelte Signalverarbeitung bewirkt, die eine grosse Sicherheit gewährleistet. Ueber das Bussystem können dann Daten über den Bus IB, die Dateneinheit DE, die acht Busleitungen b2, den Busschalter BS, die acht Busleitungen B2, die Registerschaltung RS und die Kontrollstufe KS in beiden Richtungen verkehren. Die Verkehrsrichtung wird durch das Signal Sz (Fig.2) derart bestimmt, dass für Sz = 0 Daten vom Bus ausgelesen werden, das heisst, Daten werden vom Bus IB zur Kontrollstufe KS übertragen. Für Sz = 1 verkehren die Daten in der anderen Richtung und es werden Daten im Rechner eingeschrieben. An die Busleitungen b1, b2, b3 kann beispielsweise eine Anzahl n Busschalter angeschlossen werden, die ähnlich wie der Busschalter BS aufgebaut sind, wobei über die Busleitungen B1, B2, B3 mehrere ähnliche Ein-/Ausgabe-Schaltungen PES an jedem Busschalter angeschlossen sein können. Wenn einmal der gewählte Busschalter BS mit Hilfe der Vektorschaltung VS aktiviert worden ist, kann eine bestimmte Ein-/Ausgabe-Schaltung PES aufgrund der von der Adress-Einheit AE vermittelten Adress-Signale angesteuert werden. Um die Betriebssicherheit des Bussystems zu erhöhen, werden die Adress-Signale zweimal zeitlich nacheinander von der Adress-Einheit AE abgegeben, und zwar einmal unverändert und hinterher invertiert. Damit besteht die Gewissheit dafür, dass kein Kabel des Bussystems einen Erdschluss aufweist.

Bevor aber die Einheit AE die Adress-Signale sendet, gibt die Steuereinheit Se (Fig.1) ein Signal Sz ab, das den gewünschten Lese- oder Schreibvorgang einschaltet. Dabei ist zu beachten, dass die Busleitungen aus symmetrischen Aderpaaren mit angepassten Sendeschaltungen und Datenempfängern bestehen, um die Störungen minimal zu halten.

Wenn die von den Dekodierern DI und WDI nacheinander empfangenen Adressen mit den für die gewünschte Ein-/Ausgabe-Schaltung PES vorgesehenen Adress-Codewörtern übereinstimmen, geben ihre Ausgänge die Signale AI und WI derart ab, dass das Signal AI und nachträglich das Signal WI gleich "0" werden. Bei Nichtübereinstimmung ist AI = 1 und/oder WI = 1.

Angenommen es sei Sz = 0, AI = 0 und WI = 1. Bei der darauffolgenden Anstiegsflanke des Taktsignals Sy erhalten die Ausgangssignale der Flipflops F1 bzw. F2 die Werte Q1 = 0 und Q2 = 1. Dadurch wird Sm = 0, Sn = 0, Sp = 0 und Sq = 0 und alle Register R1, R2, R3, R4 bleiben inaktiv. Wird nun die invertierte Adresse auch richtig weitergeleitet, so wird WI = 0 und beim nächsten Takt auch Q2 = 0.

Mit Sz = 0, AI = 0, WI = 0, Q1 = 0 und Q2 = 0 ergibt sich Sm = 1, Sn = 0, Sp = 0 und Sq = 1 und die Register R1 und R4 werden aktiv. Die normalen Daten werden vom Register R1 und die invertierten vom Register R4 übernommen und gleichzeitig an die Expansoren E1 bzw. E2 übergeben, an deren Ausgängen sie bitweise parallel zur Verfügung stehen. Den Anschlüssen S1 bis SN werden jedoch nur dann Signale entnehmbar sein, wenn über die Gatter DK1 und IK1 gleichzeitig gleiche oder äquivalente Signale erscheinen. Somit ist eine bitweise Datensicherung gewährleistet. Nachdem die Adresse ausgesendet worden ist, wird zunächst AI = 1 und WI = 1 und beim nächsten Takt Q1 = 1 und Q2 = 1. Damit wird wieder Sm = 0,              Sn = 0,              Sp = 0,              Sq = 0.

Um Daten einzuschreiben, muss Sz = 1, AI = 0 und WI = 0 mit Q1 = 0 und Q2 = 0 sein. Somit wird Sm = 0              Sn = 1              Sp = 1              Sq = 0 In diesem Fall werden die an den Anschlüssen S1 bis SN anliegenden Daten einerseits über den Konzentrator C1 und das Register R2 und andererseits invertiert über den Konzentrator C2 und das Register R3 zu den Busleitungen B2 übertragen. Die Flipflops F1 und F2 des Registerwählers arbeiten somit als Halteglieder, um beispielsweise das aus dem normalen Adress-Codewort decodierte Bit solange zu halten, bis das aus dem später ankommenden zusätzlichen Kontroll-Adress-Codewort decodierte Bit erzeugt wird.

Die normalen und die zusätzlichen und daher redundanten Adress-Codewörter können auch gleichzeitig übertragen werden, was eine grössere Anzahl Leitungen bedingt. In diesem Fall kann der Registerwähler RW derart mit logischen Verknüpfungen aufgebaut sein, dass folgende Bedingungen erfüllt werden :

$$\overline{Ai} \cdot \overline{Wi} \cdot \overline{Sz} = Sm = Sq$$

und

$$\overline{Ai} \cdot \overline{Wi} \cdot Sz = Sn = Sp$$

Selbstverständlich kann die Kontrollstufe KS mit Elementen anderer Art aufgebaut sein, wobei bei gleichzeitiger Uebertragung der normalen und redundanten Datenbits die als Pufferspeicher arbeitenden Register R1, R2, R3, R4 durch einfache Umschalter ersetzt werden können. Bei gewissen Anwendungen können einige der Elemente E1, C1, C2, E2 entfallen. So ergeben sich folgende Möglichkeiten, um auf einige Elemente zu verzichten :

| E1 | C1 | C2 | E2 |
|----|----|----|----|
| 1  | 1  | 0  | 1  |
| 1  | 1  | 0  | 0  |
| 1  | 0  | 1  | 0  |
| 1  | 0  | 0  | 1  |
| 1  | 0  | 0  | 0  |
| 0  | 0  | 0  | 1  |
| 0  | 1  | 1  | 0  |
| 0  | 1  | 0  | 0  |
| 0  | 0  | 1  | 0  |

wobei 1 vorhanden und 0 nichtvorhanden bedeutet.

Es ist noch zu bemerken, dass dort, wo ein Element E1, C1, C2 oder E2 fehlt, auch das ihm zugeordnete Register R1, R2, R3 bzw. R4 entfällt.

Zum besseren Verständnis der Erfindung wurde ein Beispiel angegeben, bei dem die Datensignale zunächst normal und nachher invertiert übertragen werden. Dabei können jedoch die Daten auch zuerst normal oder mit einer Codierung und dann mit einer anderen Codierung übertragen werden. In einem solchen Fall sind die invertierenden Eingänge des Expansors E2 (Fig.2) durch einen entsprechenden Coderückwandler zu ersetzen. Dasselbe gilt für die invertierenden Ausgänge des Konzentrators C2.

PATENTANSPRUECHE

1. Bussystem zur Uebertragung von Daten zwischen einer zentralen Buseinheit (BE) und mindestens einer peripheren Ein-/Ausgabe-Schaltung (PES), die einen Dekodierer (DI) aufweist, der beim Eintreffen des entsprechenden Adress-Codewortes zur Auswahl einer der Ein-/Ausgabe-Schaltungen (PES) Steuerbits abgibt, die ein Anschalten der betreffenden Ein-/Ausgabe-Schaltung (PES) an die Busleitungen (b2, B2) für den Datenfluss (Sd) bewirken, d a d u r c h  g e k e n n z e i c h n e t, dass der Deko-dierer (DI) derart zur Datensicherung als Decoderschaltung (DI, WI) ausgebildet ist, dass diese aus dem Adress-Codewort und einem zusätzlich redundant übertragenen Kontroll-Adress-Codewort zwei Ausgangssignale (AI, WI) erzeugt, wobei ein zusätz-licher Registerwähler (RW) nachgeschaltet ist, der nur beim Vorhandensein beider Aus-gangssignale (AI, WI) die Steuerbits (Sm, Sn, Sp, Sq) abgibt, und/oder dass der Ein-/Ausgabe-Schaltung (PES) eine Kontrollstufe (KS) nachgeschaltet ist, in welcher die einzelnen Bits der Folge von Datenwörtern mit den einzelnen Bits einer zusätzlich redundant übertragenen Folge von Kontroll-Datenwörtern bitweise verglichen werden und welche jeweils nur beim Vorhandensein von je einem Datenbit beider Folgen ein Datenbit weiterleitet.

2. Bussystem nach Anspruch 1, d a d u r c h  g e k e n n z e i c h n e t, dass die redundanten Kontroll-Bits jeweils durch Invertierung der Adress-Codewort-Bits und/oder der Datenbits gewonnen werden.

3. Bussystem nach Anspruch 1 oder 2, d a d u r c h  g e k e n n z e i c h n e t, dass, um das jeweilige zusätzliche Kontroll-Adress-Codewort zeitlich verzögert gegenüber dem ihm zugeordneten Adress-Codewort weiterzuleiten, der Registerwähler (RW) ein Halteglied (F1 bzw. F2) aufweist, in dem das vom Adress-Codewort decodierte Bit mindestens bis zum Eintreffen des vom Kontroll-Adress-Codewort decodierten Bit verzögert wird.

4. Bussystem nach Anspruch 1, 2 oder 3, d a d u r c h  g e k e n n z e i c h n e t, dass, um das jeweilige zusätzliche Kontroll-Datenwort zeitlich verzögert gegenüber dem ihm zugeordneten Datenwort weiterzuleiten, die Ein-/Ausgabe-Schaltung (PES) eine Registerschaltung (RS) mit mindestens zwei als Pufferspeicher arbeitenden Registern (R1, R4 bzw. R2, R3) aufweist, in denen das Datenwort mindestens bis zum Eintreffen des Kontroll-Datenwortes gespeichert wird.

5. Bussystem nach einem der Ansprüche 1 bis 4, d a d u r c h  g e k e n n z e i c h -
n e t ,  dass die Kontrollstufe (KS) eine zwischen den Ausgängen zweier Expansoren
(E1, E2) eingefügte ODER-Verdrahtungslogik (DK1, ... DKN, IK1, ... IKN) aufweist.

0096113
82P9808

FIG.1

FIG.2